# EUROPÄISCHE PATENTSCHRIFT

(11) **EP 0 536 507 B1**
(45) Veröffentlichungstag und Bekanntmachung des Hinweises auf die Patenterteilung: **17.01.1996**
(21) Anmeldenummer: 92114017.4
(22) Anmeldetag: 17.08.1992
(51) Int. Cl.: B26D 3/24

(54) **Vorrichtung zum Zerteilen eines Käselaibes**
Device for splitting a whole cheese
Dispositif pour diviser une meule de fromage

(30) Priorität: 11.10.1991 DE 9112661 U
(43) Veröffentlichungstag der Anmeldung: 14.04.1993
(73) Patentinhaber: Topp, Burkhard, D-58239 Schwerte (DE); Dott, Gerd-Dieter, D-56070 Koblenz (DE)
(72) Erfinder: Topp, Burkhard, D-58239 Schwerte (DE); Dott, Gerd-Dieter, D-56070 Koblenz (DE)
(74) Vertreter: Patentanwälte Meinke, Dabringhaus und Partner

(56) Entgegenhaltungen:
- EP-A- 0 144 513
- DE-A- 3 523 877
- FR-A- 747 804
- FR-A- 899 182
- FR-A- 2 647 387

## Beschreibung

Die Erfindung richtet sich auf eine Vorrichtung zum Zerteilen eines Käselaibes, wobei der Käse von wenigstens einem Vorschubelement durch ortsfest gehaltene Schneidklingen hindurch von einer Zuführposition in eine Weiterverarbeitungsposition im geschnittenen Zustand bewegt wird und wobei die Schneidklingen und die diesen angepaßten Vorschubelemente am Arbeitstisch der Vorrichtung auswechselbar sind.

Eine derartige Vorrichtung ist beispielsweise aus der EP-A-0 144 513 bekannt. Bei der bekannten Vorrichtung wird der Käselaib aus einer unteren Zuführposition durch einen Schneidmessersatz von unten nach oben hindurch auf einer Arbeitsfläche bewegt und liegt nach Durchgang durch den Schneidmessersatz dort zerteilt in entsprechende Käsestücke zur Weiterverarbeitung auf dem Arbeitstisch. Der Schneidmessersatz kann bei der bekannten Vorrichtung von Hand nach Entriegelung ausgehoben und durch einen anderen Schneidmessersatz ersetzt werden, was immer dann geschieht, wenn beispielsweise Käselaiber unterschiedlicher Sorten geschnitten werden sollen, da unterschiedliche Sorten in der Regel auch in unterschiedlichen Formen vorliegen.

Schneideinrichtungen, bei denen über Schneiddrähte z.B. Tortenstücke geschnitten werden, sind aus der US-2 561 274 bekannt. Käseschneideinrichtungen, die sich der gleichen Technologie von Schneiddrähten bedienen, sind beispielsweise aus der GB-941 941, der GB-957 169 oder der DE-B-11 27 657 bekannt. Butterschneider zeigen die GB-184 212 oder US-1 768 693. Zum Stand der Technik sei auch noch auf die DE-U-17 87 433, US-2 799 931, US-3 187 432 und FR-621 889 verwiesen.

Sieht man von der gattungsbildenden Druckschrift ab, zeigen die sonstigen bekannten Lösungen Einrichtungen, bei denen ein Wechsel der Schneideinrichtungen nicht vorgesehen ist, d.h. mit derartigen Einrichtungen lassen sich immer nur die gleichen Schnitte erzielen.

Aufgabe der Erfindung ist die Schaffung einer Lösung, mit der von Hand oder im vollautomatischen Betrieb sehr unterschiedliche Schnitte durchgeführt werden können, unabhängig davon, ob der zu schneidende Käselaib von unten nach oben durch einen Klingensatz hindurchgeführt wird oder von oben nach unten.

Mit einer Vorrichtung der eingangs bezeichneten Art wird diese Aufgabe gemäß der Erfindung durch die kennzeichnenden Merkmale des Anspruches 1 gelöst.

Mit der Erfindung wird erreicht, daß die Schneidmesser schnell gewechselt werden können, um den Wünschen von Kunden nachkommen zu können. Eine fehlerhafte Zuordnung zwischen Schneidklingensatz und Vorschubelementen wird vermieden, da diese Schneidklingensätze und die Vorschubelemente aufeinander abgestimmt sind.

Besonders einfach und zweckmäßig ist, daß ein Schneidklingensatz mit zugeordneten Vorschubelementen als Schnellwechselkassette ausgebildet ist.

Dies hat den Vorteil, daß immer die zugeordneten Schneidmesser mit entsprechenden Vorschubelementen als Einheit in die Vorrichtung eingebracht werden können, dort verriegelbar sind und nach Entriegeln wieder gemeinsam entnommen werden können, wobei die Gestaltung als Wechselkassette eine Vielzahl von Überwachungsmöglichkeiten eröffnet.

Eine weitere erfindungsgemäße Ausgestaltung besteht darin, daß die Schneidklingensätze revolvierend in der Arbeitstischebene angeordnet sind, d.h. über einen Drehmechanismus aus der Warteposition in die Arbeitsposition verdreht werden können.

Je nach Art der Ausgestaltung der Vorrichtung sieht die Erfindung auch vor, daß Vorschubelemente zum Durchschub des zu schneidenden Käses von unten nach oben oder von oben nach unten durch die stehenden Schneidklingen an der Vorrichtung vorgesehen sind.

Die Erfindung sieht auch vor, daß an der Wechselkassette eine Arretiervorrichtung zur Arretierung des Schneidmessers vorgesehen ist, wobei insbesondere an der Wechselkassette am Schneidmesserrahmen oder am Vorschubelementenrahmen eine mechanische, elektrische und/oder elektronische Sperreinrichtung zur Ausschließung der Schnittbewegung bei nicht korrespondierendem Vorschubelement und Messer vorgesehen ist. Wird daher beispielsweise bei noch in der Vorrichtung befindlichem Schneidmesser ein Vorschubelement benutzt, dessen Eintrittsspalte für das korrespondierende Messer nicht mit dem Messer übereinstimmt, wird durch diese Sperreinrichtung der Vorschub verhindert, so daß es nicht zu einem Messerbruch kommen kann.

In weiterer Ausgestaltung ist nach der Erfindung vorgesehen, daß das Vorschubelement auf einem schubfachartig aus der Vorrichtung bewegbaren Trag- und Hubrahmen vorgesehen ist.

Vorteilhaft ist es, wenn eine elektronische Steuereinheit zum Arretieren des Messers im Arbeitstisch der Vorrichtung, zur Bewegung des Vorschubelementes bei aufgelegtem Käselaib und zur Entnahme des Messers einschließlich des korrespondierenden Vorschubelementes bei Entnahme des Messers zum Reinigen und/oder zum Messerwechseln vorgesehen ist.

Mit einer derartigen Steuereinheit ist ein vollautomatischer Betrieb der Vorrichtung möglich zum Käseschneiden, durch eine entsprechende Programmierung kann dabei auch der Messerwechsel vollautomatisch elektronisch vorgenommen werden, etwa über Programmschalter, die die einzelnen Kassetten aus Schneidmesser und Vorschubelement abrufen und auswechseln.

Durch diese Ausgestaltung bedarf es eines Revolvierens der Hubelemente nicht, hier kann mit dem gleichen Hubelementensatz jedes beliebige Schnittmuster erzeugt werden. Hierzu bedarf es nur einer entsprechenden, ggf. computergesteuerten Aktivierung der dicht an dicht gesetzten Hubstößel, sei es, daß diese zum Anheben aufgefahren oder aber in ihrer abgesenkten Ruheposition bleiben, was immer dann geschehen muß, wenn bei dem jeweiligen Schnittmuster den Hubstößeln gegenüber in der Hubposition eine Schneidklinge angeordnet ist.

Ein einfacher, aber sehr wirkungsvoller und platzsparender Antrieb besteht darin, daß der Hubrahmen an einer Hubschwinge mit einem außerhalb des Hubrahmens und der Schneidklingen angeordneten Hydraulikzylinder angeordnet ist.

Um insbesondere ein vollautomatisches, ggf. rechnergesteuertes Arbeiten zu ermöglichen, sieht die Erfindung auch vor, daß eine Zuführeinrichtung zur Zuführung des ungeschnittenen Käses in die Schneidposition und eine Abtransporteinrichtung zum Wegführen der geschnittenen Käseteile vorgesehen ist und/oder daß zur Weiterführung des geschnittenen Käses von der Arbeitsfläche Schwenkarme vorgesehen sind, wobei die Zuführeinrichtung als Fördereinrichtung und/oder Zuführrutsche ausgebildet ist.

Erkennbar läßt die Erfindung eine Vielzahl von Schnittmuster bei zu schneidenden Käsen zu, die je nach Aufwand der Vorrichtung auch individuell programmierbar sind. Eine Möglichkeit besteht z.B. darin, daß wenigstens ein Teil der Schneidklingen zur Bildung von einfachen Tierfiguren od. dgl. einen von der Gerade abweichenden Verlauf aufweisen, wie dies die Erfindung in weiterer Ausgestaltung ebenfalls vorsieht. Für sich gesehen ist ein derartiger, allerdings von Hand zu bedienender Klingensatz aus dem DE-U-85 14 599 bekannt.

Weitere Vorteile, Einzelheiten und Merkmale der Erfindung ergeben sich aufgrund der nachfolgenden Beschreibung sowie anhand der Zeichnung. Diese zeigt in
- Fig. 1: eine vereinfachte perspektivische Darstellung einer erfindungsgemäßen Vorrichtung, teilweise aufgebrochen, nach einer ersten Ausgestaltung der Erfindung,
- Fig. 2: eine Aufsicht auf unterschiedliche Messerformen,
- Fig. 3: eine vereinfachte räumliche Darstellung der Vorrichtung nach einer weiteren Ausführungsform der Erfindung,
- Fig. 4: eine Aufsicht auf die Vorrichtung gemäß Fig. 3,
- Fig. 5: eine Aufsicht auf einen Hubrahmen mit Hubelementen sowie in
- Fig. 6: eine Seitenansicht des Hubrahmens in der Darstellungsweise gemäß Fig. 5.

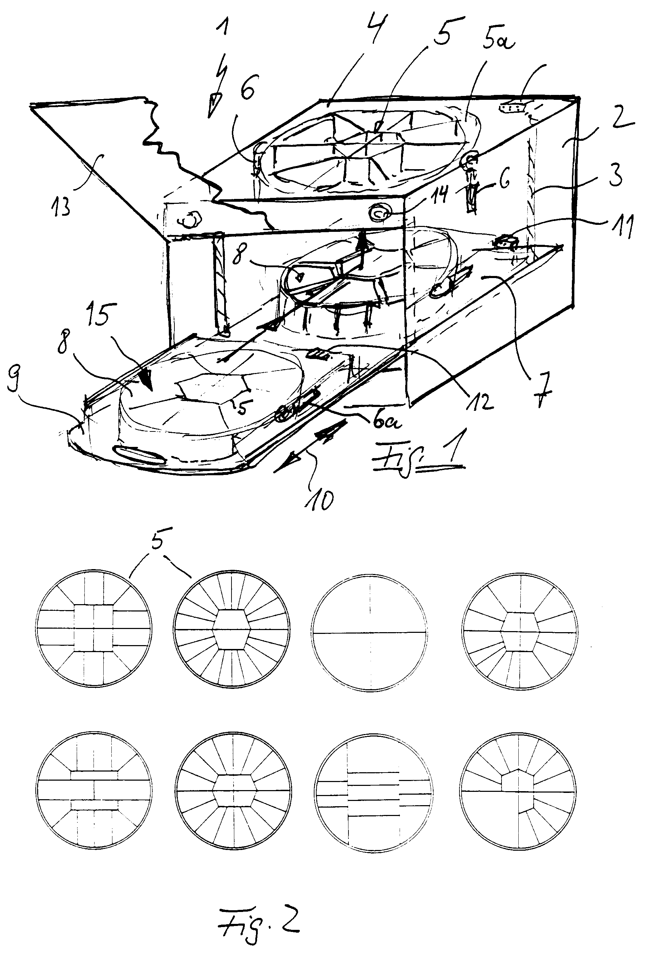

Die in Fig. 1 allgemein mit 1 bezeichnete Vorrichtung besteht aus einem nur andeutungsweise wiedergegebenen Gehäuse 2 mit beispielsweise im Bodenbereich vorgesehenem, nicht näher dargestellten Antriebsmotor, der beispielsweise Hubspindeln 3 bewegt, über die die zu bewegenden Elemente nach oben und unten bewegt werden können.

Im mit 4 bezeichneten Arbeitstisch der Vorrichtung 1 ist ein Schneidmesser 5 vorgesehen, wobei in Fig. 2 unterschiedliche Gestaltungsformen eines solchen Messers dargestellt sind, hier mit Aufsicht auf die Schneidklingen.

Das Schneidmesser 5 ist mit einem Arretierrahmen 5a ausgerüstet, der über Arretierelemente 6 im Gehäuse 2 in der Ebene des Arbeitstisches 4 verriegelbar ist. Auf einem mit 7 bezeichneten Hubrahmen, der beispielsweise über die Spindein 3 nach oben und unten bewegbar ist, befindet sich das allgemein mit 8 bezeichnete Vorschubelement, auf das in der Benutzungslage ein Käselaib aufgelegt wird. Das Vorschubelement 8 weist in seiner Oberfläche Schlitze auf, die genau mit denen der Messer des Messerelementes 5 übereinstimmen.

Das Vorschubelement 8 ist in der Auswechsellage mit dem Messer 5 zu einer Art Kassette 15 zusammengefaßt und kann auf einen Schubrahmen 9 aufgelegt werden, der schubfachartig gemäß Doppelpfeil 10 in Fig. 1 in das Gehäuse 2 eingeschoben werden kann und aus diesem wieder ausziehbar ist.

Die Wirkungsweise der Vorrichtung ist dabei die folgende:
Eine aus Messer 5 und Vorschubelement 8 bestehende Kassette 15 wird aufgelegt und nach innen in die Vorrichtung geschoben. Ggf. vorgesehene Steckkontakte 11 und 12 können dabei ineinanderrasten, um so ein elektronisches Signal abzugeben, welche Art von Messer derzeit als Kassette 15 eingeschoben ist.

Ergibt sich eine elektronische Freigabe, die dann erfolgt, wenn sich im Arbeitstisch kein Messersatz befindet, kann beispielsweise über die Spindeln 3 die Kassette 15 nach oben in den Arbeitstisch angehoben werden, wobei automatisch die Verriegelungselemente 6 aus einer zunächst mit 6a bezeichneten Freigabestellung in die Verriegelungsstellung verschwenkt werden, derart, daß das Messer 5 im Arbeitstisch verrastet.

Nunmehr kann das Vorschubelement nach unten abgesenkt und schubfachartig aus der Vorrichtung herausgezogen werden, um einen Käselaib aufzulegen. Liegt ein Käselaib auf dem Vorschubelement 8, kann dieses wieder erneut in die Vorrichtung eingeschoben werden. Mit einem Messer und einem korrespondierenden Vorschubelement kann nunmehr die Hubbewegung zum Zwecke des Zerteilens des Käses vorgenommen werden.

Bei Entnahme des Messersatzes 5 ist die Verfahrensweise umgekehrt, d.h., das Vorschubelement 8 wird nach oben verfahren, die Verriegelungselemente 6 gelöst und Messer und Vorschubelement können gemeinsam abgesenkt und dann aus der Vorrichtung herausgenommen werden.

In der Fig. 1 ist noch angedeutet, daß beispielsweise eine Sicherung so vorgenommen werden kann, daß der Deckel 13 geschlossen sein muß, um den Hubvorgang auszulösen, dieser Hubvorgang wird mittels beidhändig zu bedienender Druckknöpfe 14 ausgelöst.

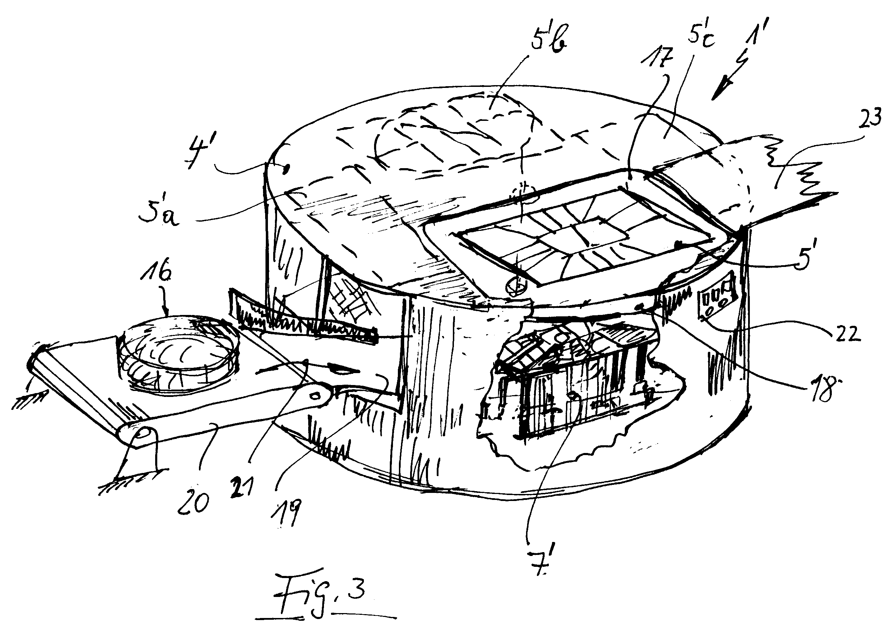

Die in Fig. 3 allgemein mit 1' bezeichnete Vorrichtung zum Schneiden eines andeutungsweise wiedergegebenen Käselaibes 16 wird im wesentlichen von einem Arbeitstisch 4' gebildet, mit wenigstens einem Ausschnitt 17, dem ein Schneidklingensatz 5' zugeordnet ist.

Im dargestellten Beispiel ist der Schneidklingensatz 5' auf einer Art Drehscheibe 18 angedeutet, die revolvierend unterhalb der Tischfläche 4' angeordnet ist und eine Mehrzahl von Schneidklingensätzen 5a', 5b' und 5c' trägt, die in Fig. 3 nur andeutungsweise wiedergegeben sind. Der notwendige Drehantrieb ist in den Figuren nicht gesondert dargestellt.

Unterhalb des Schneidklingensatzes 5' und unterhalb der Tischfläche 4' ist eine Hubeinrichtung, allgemein mit 7' bezeichnet, vorgesehen, auf die z.B. über eine Rutsche 19 nach Abwurf von einem Förderband 20 der Käselaib 16 von links nach rechts in im Fig. 3 dargestellten Beispiel gelangt, was mit dem Pfeil 21 angedeutet ist. Liegt der Käselaib 16 auf der Hubeinrichtung 7', kann diese nach oben verfahren werden, derart, daß der Käselaib 16 von unten nach oben durch den Schneidklingensatz 5' hindurch auf die Ebene des Arbeitstisches 4' gehoben und dabei gleichzeitig dem Schnittmuster entsprechend geteilt wird.

Zur Steuerung des Programmablaufes kann seitlich eine Schalttafel 22 vorgesehen sein, was in Fig. 3 nur andeutungsweise wiedergegeben ist, ebenso wie eine Abtransporteinrichtung, etwa ein weiteres Förderband 23, um die geschnittenen Käse in Fig. 3 von rechts nach links zur Weiterverarbeitung, z.B. zu einer Verpackungsanlage, zu fördern.

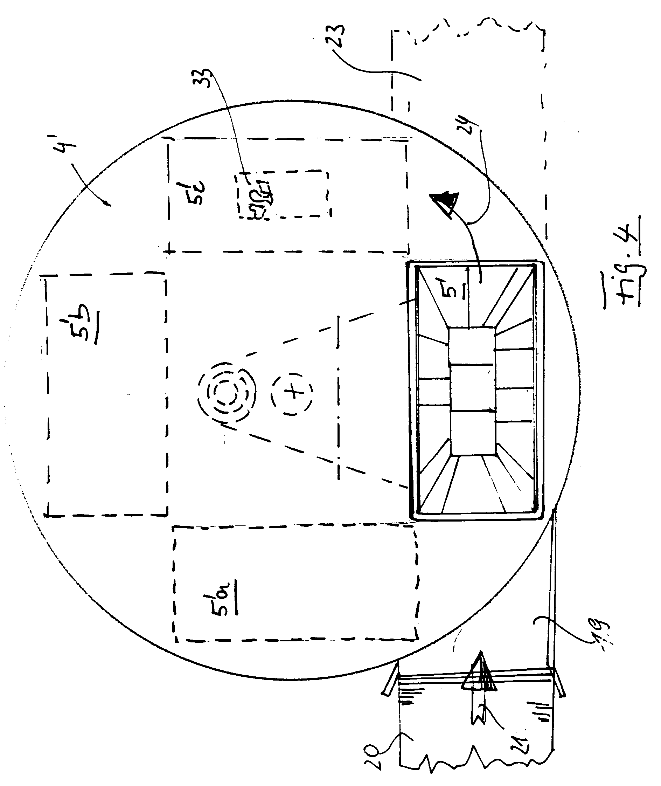

In Fig. 3 ist dargestellt, daß das Vorschubelement 7' für den Käselaib 16 dem Schnittmuster des darüberliegenden Schneidklingensatzes 5' entsprechend ausgestaltet ist und, was nicht näher dargestellt ist, entsprechend revolvierend synchron in der Vorrichtung 1' gelagert ist, wie sich dies etwa auch aus der Aufsicht gemäß Fig. 4 ergibt, wobei die Revolvierbarkeit sowohl des Klingensatzes 5' als auch der Vorschubelemente 7' durch einen Pfeil 24 angedeutet ist.

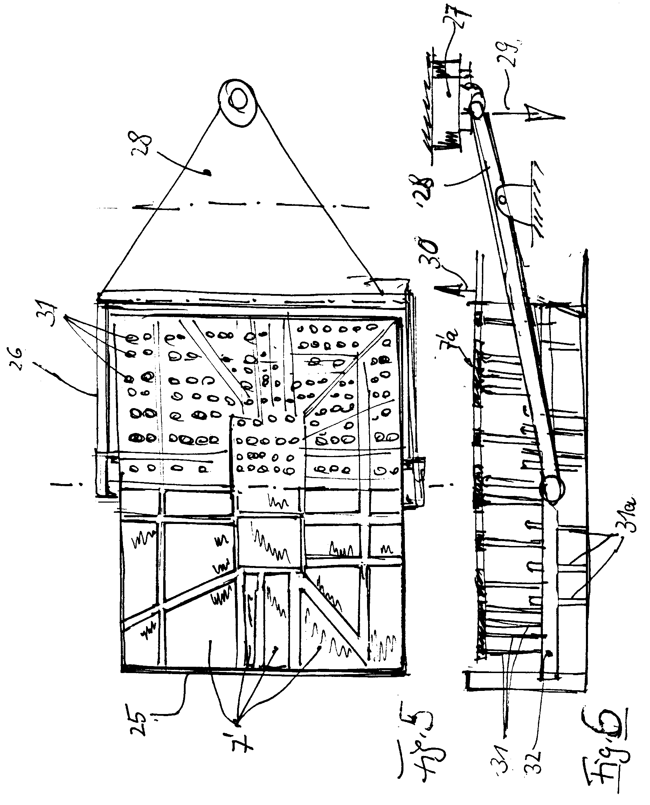

Die Vorschubelemente 7' sind beispielsweise in einem Hubrahmen 25 angeordnet, wenn und soweit sie dem Schnittmuster des darüberliegenden Schneidklingensatzes entsprechen. Dies ist in Fig. 5 in der linken Figurenhälfte angedeutet. Der Hubrahmen 25 wird im dargestellten Beispiel von einer Hubklaue oder einem Hubbügel 26 seitlich beaufschlagt, der über eine hydraulische Kolben/Zylindereinheit 27 und eine Hubschwinge 28 angehoben werden kann, etwa wie sich aus den Fig. 5 und 6 ergibt, wobei bei der Absenkbewegung der Kolben/Zylindereinheit gemäß Pfeil 29 die Vorschubelemente 7' bzw. 7a' nach oben angehoben werden, was mit dem Pfeil 30 angedeutet ist.

In den Fig. 5 und 6 ist auch eine etwas andere Art der Vorschubelemente dargestellt, hier allgemein mit 7a' bezeichnet.

Um die Vorschubelemente 7' nicht in gleicher Weise revolvierend ausbilden zu müssen, kann eine andere Lösung vorgesehen sein, etwa in der Art, wie sie sich aus Fig. 5 rechte Figurenhälfte bzw. aus Fig. 6 ergibt. Hier ist eine Vielzahl von dicht an dicht gepackten Hubstößeln 31 vorgesehen, die ggf. elektronisch gesteuert in einer Hubplatte 32 gelagert sind und so aktiviert werden können, daß sie entweder von der Hubplatte 32 mit nach oben geführt werden oder, wenn dies nicht gewünscht wird, in der unteren Ruhestellung verbleiben. Die entsprechenden Hubstößel sind in Fig. 6 mit 31 bezeichnet.

Wird nun über die Tastatur 22 ein bestimmter Käse als zu schneiden programmiert, fährt der entsprechende Schneidklingensatz 5' in die Arbeitstischposition, in der Hubplatte 32 werden die notwendigen Hubstößel 31 rastend eingeklinkt. Über die Kolben/Zylindereinheit 27 werden dann die entsprechenden Vorschubelemente 7a' nach oben angehoben, wie in Fig. 6 wiedergegeben, die nicht benötigten oder nicht gewünschten Hubstößel 31 verbleiben in der unteren Ruhestellung.

Um unterschiedliche Schnittmuster erzeugen zu können, kann beispielsweise ein Schneidklingensatz 5c' mit speziell geformten Klingen 33 ausgerüstet sein, die es zulassen, z.B. ausgestanzte Käsestangen in Herzform, in Baumform, in einfachen Tierkonturformen u. dgl. zu stanzen, so daß der Endverbraucher beim Zerschneiden derartiger Käsestangen statt bekannter Käsewürfel entsprechende Käsestücke erhält, die bestimmte einfache Außenkonturen aufweisen, etwa die Symbole von Spielkarten für einen Skat-Abend, Tierfiguren für einen Kindergeburtstag u. dgl. mehr.

Natürlich sind die beschriebenen Ausführungsbeispiele der Erfindung noch in vielfacher Hinsicht abzuändern, ohne den Grundgedanken zu verlassen. So kann beispielsweise die hydraulische Hubeinrichtung je nach Platzangebot direkt unter den Vorschubelementen 7' bzw. 7a' angebracht sein, es können statt der hydraulischen Vorschubeinrichtung andere Vorschubeinrichtungen vorgesehen sein, etwa über gedrehte Spindeln u. dgl. mehr.

## Patentansprüche

1. Vorrichtung (1) zum Zerteilen eines Käselaibes (16), wobei der Käse von wenigstens einem Vorschubelement (8) durch ortsfest gehaltene Schneidklingen (5) hindurch von einer Zuführposition in eine Weiterverarbeitungsposition im geschnittenen Zustand bewegt wird und wobei die Schneidklingen (5) und die diesen angepaßten Vorschubelemente (8) am Arbeitstisch (4) der Vorrichtung (1) auswechselbar sind,
dadurch gekennzeichnet,
daß der Arbeitstisch (4) versehen ist mit einer Einrichtung zur Positionierung einer Schnellwechselkassette (15) bestehend aus einem Schneidklingensatz (5) mit dem jeweiligen den Vorschub des Käselaibes bewirkenden, dem Schnittmuster des entsprechenden Schneidklingensatzes angepaßten Vorschubelementen (8), wobei die jeweilige zum Einsatz kommende Schnellwechselkassette (15) aus einer nicht bearbeitenden Position in die Arbeitsposition bewegt wird.

2. Vorrichtung nach Anspruch 1,
dadurch gekennzeichnet,
daß die Vorschubelemente (7') und/oder die Schneidklingensätze (5') revolvierend in der Ebene des Arbeitstisches (4') angeordnet sind.

3. Vorrichtung nach einem der vorangehenden Ansprüche,
dadurch gekennzeichnet,
daß an der Wechselkassette (15) eine Arretiervorrichtung (6,6a) zur Arretierung des Schneidmessers (5) vorgesehen ist.

4. Vorrichtung nach einem der vorangehenden Ansprüche,
dadurch gekennzeichnet,
daß an der Wechselkassette (15) am Schneidmesserrahmen (5a) oder am Vorschubelementenrahmen (9) eine mechanische, elektrische und/oder elektronische Sperreinrichtung zur Ausschließung der Schnittbewegung bei nicht korrespondierendem Vorschubelement und Messer vorgesehen ist.

5. Vorrichtung nach einem der vorangehenden Ansprüche,
dadurch gekennzeichnet,
daß das Vorschubelement (8) auf einem schubfachartig, aus der Vorrichtung bewegbaren Trag- und Hubrahmen (9) vorgesehen ist.

6. Vorrichtung nach einem der vorangehenden Ansprüche,
dadurch gekennzeichnet,
daß eine elektronische Steuereinheit zum Arretieren des Messers (5) im Arbeitstisch (4) der Vorrichtung (1) zur Bewegung des Vorschubelementes (8) bei aufgelegtem Käselaib und zur Entnahme des Messers (5) einschließlich des korrespondierenden Vorschubelementes (8) bei Entnahme des Messers zum Reinigen und/oder zum Messerwechseln vorgesehen ist.

7. Vorrichtung nach einem der vorangehenden Ansprüche,
dadurch gekennzeichnet,
daß die Vorschubelemente (7a') aus einer Vielzahl vergleichsweise dicht nebeneinander liegender Hubstößel (31, 31a) gebildet sind, die dem jeweiligen Schnittmuster entsprechend über einen Hubrahmen (32) individuell anhebbar sind, wobei die nicht benötigten Hubstößel (31a) in ihrer unteren Ruhestellung gehalten sind.

8. Vorrichtung nach einem der vorangehenden Ansprüche mit einem hydraulisch bewegbaren Hubrahmen,
dadurch gekennzeichnet,
daß der Hubrahmen (32) an einer Hubschwinge (28) mit einem außerhalb des Hubrahmens und der Schneidklingen angeordneten Hydraulikzylinder (27) angeordnet ist.

9. Vorrichtung nach einem der vorangehenden Ansprüche,
dadurch gekennzeichnet,
daß wenigstens ein Teil der Schneidklingen (33) zur Bildung von einfachen Tierfiguren od. dgl. einen von der Gerade abweichenden Verlauf aufweisen.

## Claims

1. Apparatus for cutting up a cheese (16), wherein the cheese is moved by at least one forward feed element (8) through fixed cutting blades (5) from a feed position into a reprocessing position in the cut state, and wherein the cutting blades (5) and the forward feed elements (8) adapted thereto are exchangeable on the work table (4) of the apparatus (1), characterised in that
the work table (4) is provided with a device for positioning a quick-change cassette (15) consisting of a set of cutting blades (5) with the respective forward feed elements (8), which are adapted to the cutting pattern of the corresponding cutting blade set and effect the forward feed of the cheese, in which case the respective quick-change cassette (15) coming into use is moved from a non-operating position into an operating position.

2. Apparatus according to claim 1, characterised in that the forward feed elements (7') and/or the cutting blade sets (5') are arranged so as to revolve in the plane of the work table (4').

3. Apparatus according to one of the preceding claims, characterised in that a locking device (6, 6a) for locking the cutting blade (5) is provided on the quick-change cassette (15).

4. Apparatus according to one of the preceding claims, characterised in that a mechanical, electrical and/or electronic locking device for shutting off the cutting motion in the case of a non-corresponding forward feed element and blade is provided on the quick-change cassette (15) on the cutting blade frame (5a) or on the forward feed element frame (9).

5. Apparatus according to one of the preceding claims, characterised in that the forward feed element (8) is provided on a drawer-like carrying and lifting frame (9) capable of being moved out of the apparatus.

6. Apparatus according to one of the preceding claims, characterised in that an electronic control unit for locking the blade (5) is provided in the work table (4) of the apparatus (1) for moving the forward feed element (8) when the cheese round is laid thereon and for removing the blade (5) including the corresponding forward feed element (8) when the blade is removed in order to be cleaned and/or replaced.

7. Apparatus according to one of the preceding claims, characterised in that the forward feed elements (7a') are formed from a large number of relatively closely adjacent jacks (31, 31a), which are liftable individually via a lifting frame (32) according to the respective cutting pattern, the jacks (31a) not required being held in their lower, rest position.

8. Apparatus according to one of the preceding claims comprising a hydraulic lifting frame, characterised in that the lifting frame (32) is disposed on a rocker (28) with a hydraulic cylinder (27) disposed outside the lifting frame and the cutting blades.

9. Apparatus according to one of the preceding claims, characterised in that at least some of the cutting blades (33) have a shape which departs from the rectilinear in order to form simple animal figures or the like.

## Revendications

1. Dispositif (1) pour diviser une meule de fromage (16), le fromage étant transporté par au moins un élément d'avance (8), de sa position de départ jusqu'à un poste de traitement ultérieur, où il arrive à l'état découpé après avoir traversé des lames de coupe (5) maintenues en position fixe ; les lames de coupe (5) et les éléments d'avance (8), adaptés aux lames de coupe, étant démontables sur le plan de travail (4) du dispositif (1),
caractérisé en ce que
le plan de travail (4) est équipé d'un mécanisme destiné à positionner une cassette (15) rapidement interchangeable, qui se compose d'un jeu de lames de coupe (5) et d'un élément d'avance (8) adapté au modèle de coupe du jeu de lames de coupe (5) correspondant et assurant l'avancement de la meule de fromage, chaque cassette rapidement interchangeable utilisée étant déplacée de la position de repos vers la position de travail.

2. Dispositif selon la revendication 1, caractérisé en ce que les éléments d'avance (7') et/ou les jeux de lames de coupe (5') sont logés dans un plateau revolver au niveau du plan de travail (4').

3. Dispositif selon l'une quelconque des revendications précédentes, caractérisé en ce qu'un dispositif d'arrêt (6, 6a) destiné à bloquer le couteau (5) est prévu sur la cassette interchangeable (15).

4. Dispositif selon l'une quelconque des revendications précédentes, caractérisé en ce qu'un système de blocage mécanique, électrique et/ou électronique est monté sur la cassette (15) interchangeable sur le cadre du couteau (5a) ou sur le cadre de l'élément d'avance (9), destiné à bloquer le mouvement de coupe si l'élément d'avance ne correspond pas au couteau.

5. Dispositif selon l'une quelconque des revendications précédentes, caractérisé en ce que l'élément d'avance (8) est monté sur un cadre-support et élévateur (9) se déplacant comme un tiroir dans le dispositif.

6. Dispositif selon l'une quelconque des revendications précédentes, caractérisé en ce qu'il comporte une unité de commande électronique destinée à bloquer le couteau (5) dans le plan de travail (4) du dispositif (1), à déplacer l'élément d'avance (8) sur lequel est posée la meule de fromage et à retirer le couteau (5) avec l'élément d'avance (8) correspondant pour le nettoyer et/ou le remplacer.

7. Dispositif selon l'une quelconque des revendications précédentes, caractérisé en ce que les éléments d'avance (7a') se composent de nombreux poinçons mobiles (31, 31a), serrés les uns contre les autres, qui en fonction de chaque modèle de coupe peuvent être remontés individuellement par l'intermédiaire d'un cadre de levage (32), les poinçons mobiles (31a) non nécessaires restant dans leur position de repos.

8. Dispositif selon l'une quelconque des revendications précédentes avec un cadre de levage actionné par voie hydraulique, caractérisé en ce que le cadre de levage (32) est relié à une coulisse de levage (28) montée sur un vérin hydraulique (27) monté à l'extérieur du cadre de levage et des lames de coupe.

9. Dispositif selon l'une quelconque des revendications précédentes, caractérisé en ce que les contours d'au moins une partie des lames de coupe (33), celles destinées à la découpe de figures animales simplifiées ou autres figures, sont représentés par des tracés autres que des lignes droites.
